# EUROPEAN PATENT APPLICATION

(11) **EP 3 495 214 A1**
(43) Date of publication of application: **12.06.2019**
(21) Application number: 18210542.9
(22) Date of filing: 05.12.2018
(51) Int. Cl.: B60R 13/08

(54) **VEHICLE LOWER STRUCTURE**

(30) Priority: 08.12.2017 JP 2017236087
(71) Applicant: TOYOTA JIDOSHA KABUSHIKI KAISHA, Toyota-shi, Aichi-ken, 471-8571 (JP)
(72) Inventor: SHINDO, Yoshitaka, TOYOTA-SHI, AICHI-KEN, 471-8571 (JP)
(74) Representative: Cabinet Beau de Loménie

(57) **Abstract**

A vehicle lower structure includes a plate-shaped under cover (10) configured to be attached to a lower section of a vehicle (C) to form a part of an underside of the vehicle (C), and an air-permeable sound-absorbing member (40), which is attached to an upper surface of the under cover (10). The under cover (10) includes one or more vent holes (38) extending through the under cover (10) in a thickness direction. The sound-absorbing member (40) is attached to the under cover (10) so as to close the one or more vent holes (38).

## Description

The present disclosure relates to a vehicle lower structure.

Japanese Laid-Open Patent Publication No. 2005-186825 describes a vehicle lower structure that includes an under cover covering the internal combustion engine and the transmission from below. This under cover includes a lower plate section, which is located below the internal combustion engine and the transmission, and two side plate sections, which extend upward from the opposite edges in the vehicle width direction of the lower plate section. The lower surface of the lower plate section of the under cover forms the underside of the vehicle. An air-permeable sound-absorbing member is attached to the upper surface of the lower plate section and the inner surfaces of the two side plate sections, which face each other.

The vehicle lower structure of the above-described publication has a space below the internal combustion engine and the transmission and above the under cover. If the acoustic waves caused by vibration of the internal combustion engine or the transmission resonate in the space above the under cover, they may cause noise. The vehicle lower structure of the above-described publication fails to sufficiently prevent this noise, even though its sound-absorbing member is capable of reducing noises to some extent. There is a need for further reducing the noise occurring in the space above the under cover in a vehicle lower structure.

### SUMMARY

In accordance with one aspect of the present disclosure, a vehicle lower structure is provided that includes a plate-shaped under cover and an air-permeable sound-absorbing member. The under cover is configured to be attached to a lower section of a vehicle to form a part of an underside of the vehicle. The sound-absorbing member is attached to an upper surface of the under cover. The under cover includes one or more vent holes extending through the under cover in a thickness direction. The sound-absorbing member is attached to the under cover so as to close the one or more vent holes.

Other aspects and advantages of the present disclosure will become apparent from the following description, taken in conjunction with the accompanying drawings, illustrating exemplary embodiments.

### BRIEF DESCRIPTION OF THE DRAWINGS

Fig. 1 is a bottom view showing a vehicle lower structure of an embodiment arranged in the front section of a vehicle;
Fig. 2 is an exploded perspective view of the vehicle lower structure of Fig. 1 as viewed obliquely from below;
Fig. 3 is a top view of the vehicle lower structure of Fig. 1;
Fig. 4 is a top view of a side covering member of the vehicle lower structure of Fig. 1;
Fig. 5 is a cross-sectional view taken along line 5-5 in Fig. 3;
Fig. 6 is a top view of a center covering member of the vehicle lower structure of Fig. 1;
Fig. 7 is a top view of a center sound-absorbing member of the vehicle lower structure of Fig. 1; and
Fig. 8 is a cross-sectional view taken along line 8-8 in Fig. 3.

### DETAILED DESCRIPTION

A vehicle C that includes a vehicle lower structure according to the present disclosure is now described. In the following description, the front-rear direction, the up-down direction, and the width direction (left-right direction) of the vehicle C are used to describe directions.

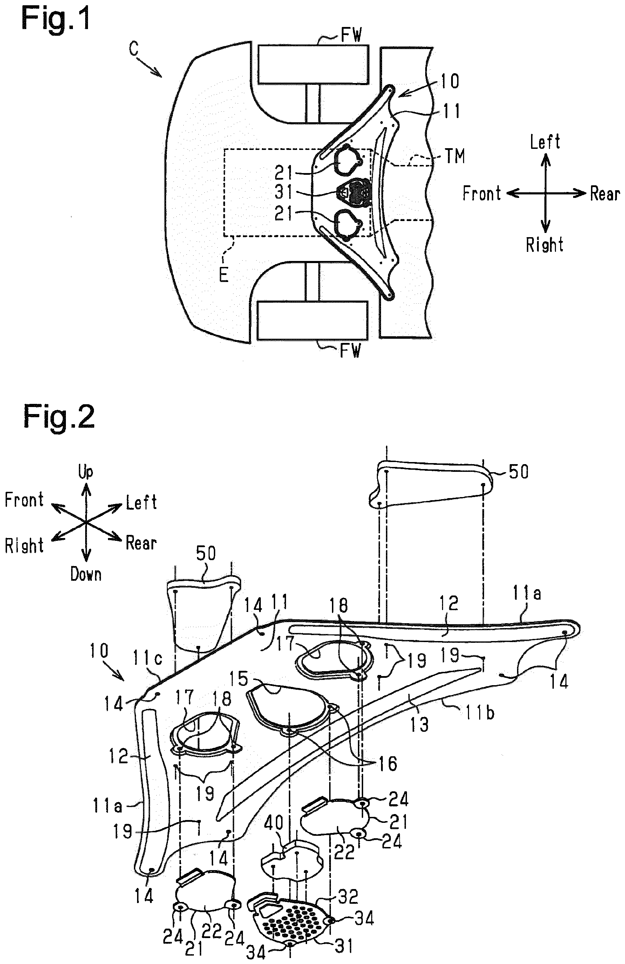

As shown in Fig. 1, the front section of the vehicle C includes an internal combustion engine E, which is a driving source of the vehicle C. The internal combustion engine E is located between the two front wheels FW in the vehicle width direction. The rear side of the internal combustion engine E is coupled to a transmission TM, to which rotation of the crankshaft of the internal combustion engine E is transmitted. The transmission TM converts the torque and the rotational speed of the transmitted rotational force.

The vehicle lower structure of the present embodiment includes an under cover 10, a center covering member 31, a center sound-absorbing member 40, a plurality of side covering members 21, and a plurality of side sound-absorbing members 50. The vehicle lower structure is a structural member arranged at the underside of the vehicle C.

The plate-shaped under cover 10 is attached to the lower section of the vehicle C to cover the internal combustion engine E and the transmission TM from below. The under cover 10 is located at the center in the width direction of the vehicle C and covers the region including the rear section of the internal combustion engine E and the front section of the transmission TM from below. The lower surface of the under cover 10 forms a part of the underside of the vehicle C.

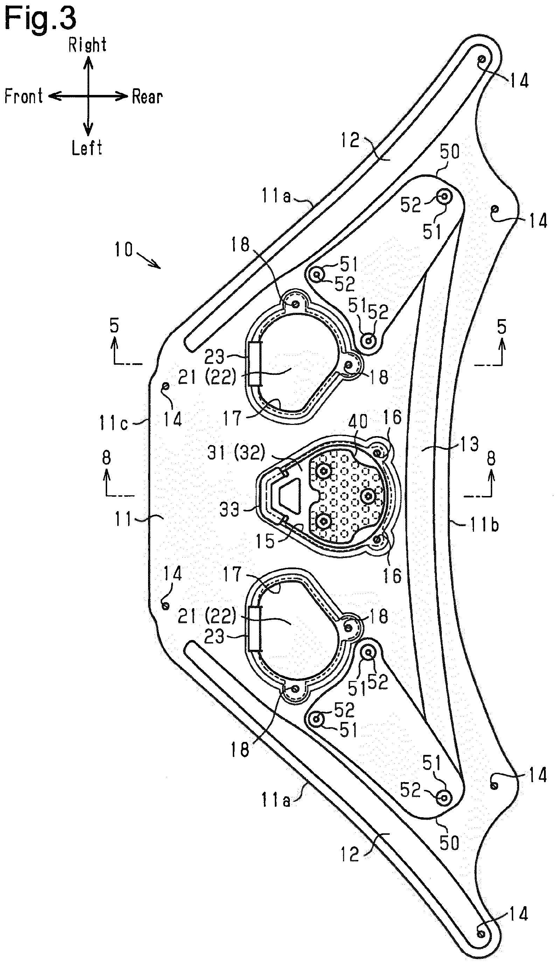

As shown in Figs. 2 and 3, the under cover 10 includes a plate-shaped under cover body 11. As viewed from above, the under cover body 11 has a trapezoidal shape that is generally symmetrical. Of the short side and the long side that are parallel to each other in the trapezoid, the long side is located rearward of the short side. From the left and right sides of the under cover body 11, side ridges 12 extend downward (toward the rear side of the drawing sheet of Fig. 3). The two side ridges 12 each extend substantially along the entire length of the corresponding one of the left and right side edges 11a of the under cover body 11 (the oblique sides of the trapezoid). The two side ridges 12 are formed by partially deforming the plate-shaped under cover body 11 to bulge.

A rear ridge 13 extends downward from the rear section of the under cover body 11. The rear ridge 13 extends along the rear edge 11b (the long side of the trapezoid) of the under cover body 11. The rear ridge 13 has a length of about 60% of the length of the rear edge 11b of the under cover body 11, and the center in the extending direction of the rear ridge 13 is located at the center in the vehicle width direction of the under cover body 11.

The under cover body 11 includes a plurality of bolt holes 14 extending through the under cover body 11 in the thickness direction. The bolt holes 14 are located at two positions near the front edge 11c (the short side of the trapezoid) of the under cover body 11 and at four positions near the rear edge 11b of the under cover body 11. Bolts (not shown) are inserted into the bolt holes 14 to fix the under cover body 11 (the under cover 10) to the bodywork (frame) or other members of the vehicle C.

As shown in Figs. 2 and 3, the under cover body 11 includes at its center a center service hole 15 extending through the under cover body 11 in the thickness direction. As viewed from above, the center service hole 15 substantially has the shape of a droplet. Specifically, the center service hole 15 has a straight front edge, a tapered section, in which the dimension in the vehicle width direction decreases toward the front edge from the center in the front-rear direction, and a semicircular section extending rearward from the center in the front-rear direction. The center service hole 15 has an opening that is sized so that fingers or tools are insertable from below the under cover body 11 toward the components above the under cover body 11, such as the internal combustion engine E and the transmission TM. Specifically, the dimensions of the center service hole 15 in the front-rear direction and vehicle width direction are greater than or equal to 10 cm. The rim of the opening of the center service hole 15 in the under cover body 11 is bent upward so as to form a step. The height of this step of the rim is about the same as the thickness of the under cover body 11, for example. In this embodiment, when the under cover 10 is attached to the lower section of the vehicle C, the center service hole 15 is located directly below the internal combustion engine E in the up-down direction of the vehicle C.

The under cover body 11 includes two first attachment holes 16, which extend through the under cover body 11 in the thickness direction near the rim of the opening of the center service hole 15. The two first attachment holes 16 are located separately in the vehicle width direction at positions along the semicircular arc of the rim of the opening of the center service hole 15.

The under cover body 11 includes two side service holes 17 extending through the under cover body 11 in the thickness direction. The side service holes 17 are located outward of the center service hole 15 and inward of the two side ridges 12 in the vehicle width direction. The side service holes 17 are located on the opposite sides of the center service hole 15 in the vehicle width direction. As viewed from above, each side service hole 17 is elliptical and has a dimension in the vehicle width direction that is slightly longer than the dimension in the front-rear direction. Each side service hole 17 includes a straight front edge and a straight section, which extends relative to the front edge such that the side service hole 17 is tapered down toward the inner side in the vehicle width direction. As is the case with the center service hole 15, each side service hole 17 has an opening that is sized so that fingers or tools are insertable from below the under cover body 11 toward the components above the under cover body 11, such as the internal combustion engine E and the transmission TM. The rim of the opening of each side service hole 17 in the under cover body 11 is bent upward so as to form a step. The height of this step of the rim is about the same as the thickness of the under cover body 11, for example. In this embodiment, when the under cover 10 is attached to the lower section of the vehicle C, the side service holes 17 are located directly below the internal combustion engine E in the up-down direction of the vehicle C.

The under cover body 11 includes two second attachment holes 18 near the rim of the opening of each of the two side service holes 17. The second attachment holes 18 extend through the under cover body 11 in the thickness direction. That is, two second attachment holes 18 are provided for each side service hole 17. One of the two second attachment holes 18 near each side service hole 17 is located beside the section of the rim of the opening of the side service hole 17 that is closest to the rear ridge 13. The other one of the two second attachment holes 18 is located outward of the side service hole 17 in the vehicle width direction.

As shown in Fig. 2, the under cover body 11 includes a plurality of third attachment holes 19 between the rear edge 11b and the two side service holes 17. The third attachment holes 19 extend through the under cover body 11 in the thickness direction. The under cover body 11 includes six third attachment holes 19 in total, three on the inner side of each of the left and right side edges 11a in the vehicle width direction.

As shown in Figs. 2 and 3, side covering members 21 are attached to the under cover body 11 to close the side service holes 17. Two side covering members 21 are provided, each attached to the corresponding one of the left and right side service holes 17.

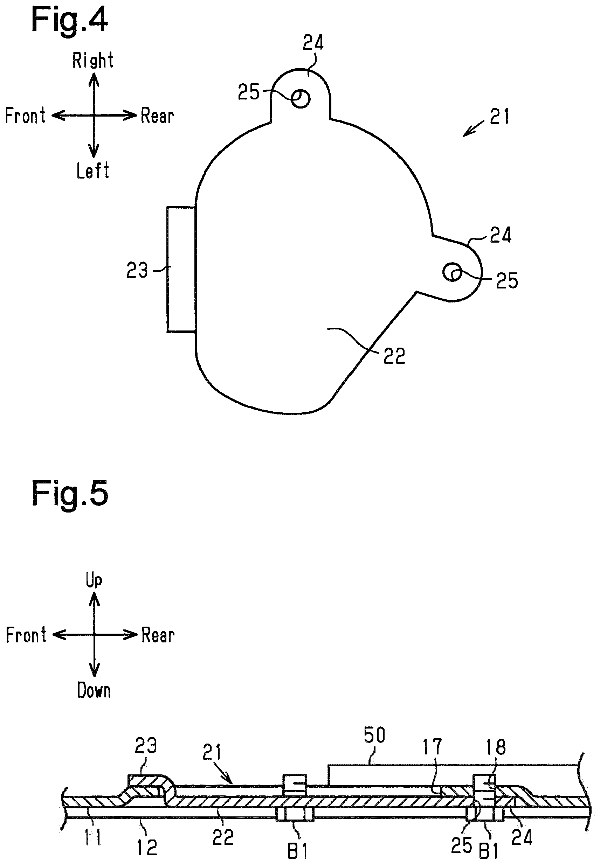

As shown in Fig. 4, each side covering member 21 includes a plate section 22, which has a similar shape as the side service hole 17 and has a larger size than the side service hole 17 as viewed from above. In this embodiment, the outer periphery of the plate section 22 is sized to be fitted to the step of the rim of the opening of the side service hole 17 in the under cover body 11.

A plate-shaped locking section 23 extends from the front edge of the plate section 22. The locking section 23 is rectangular as viewed from above. As shown in Fig. 5, the locking section 23 is bent so as to be located above the plate section 22, and the boundary section between the locking section 23 and the plate section 22 includes a step. As shown in Fig. 4, attachment sections 24 extend from the rear edge and the outer edge in the vehicle width direction of the plate section 22. Each attachment section 24 includes one through hole 25 extending through the attachment section 24 in the thickness direction. The two attachment sections 24 (the through holes 25) have the same positional relationship as the corresponding two second attachment holes 18. Fig. 4 is a top view of the right one of the two side covering members 21. The left side covering member 21 is symmetrical to the right side covering member 21.

As shown in Fig. 5, the locking section 23 of the side covering member 21 is engaged with the front edge of the side service hole 17 and placed over the upper surface of the under cover body 11. Bolts B1 are inserted into the through holes 25 of the side covering members 21 and the second attachment holes 18 of the under cover body 11. The bolts B1 fasten the side covering member 21 to the under cover body 11 with the side service hole 17 of the under cover body 11 closed by the plate section 22 of the side covering member 21. Figs. 2 and 3 do not show the bolts B1.

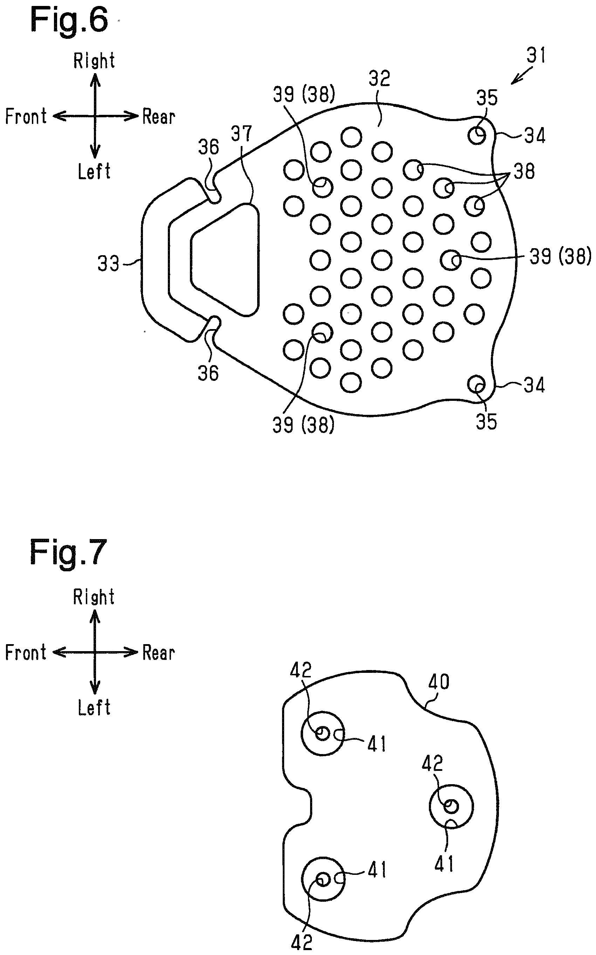

As shown in Figs. 2 and 3, a center covering member 31 is attached to the under cover body 11 to close the center service hole 15. As shown in Fig. 6, the center covering member 31 includes a plate section 32. The plate section 32 has a similar shape as the center service hole 15 as viewed from above and has a larger size than the center service hole 15. In this embodiment, the outer periphery of the plate section 32 is sized to be fitted to the step of the rim of the opening of the center service hole 15 in the under cover body 11.

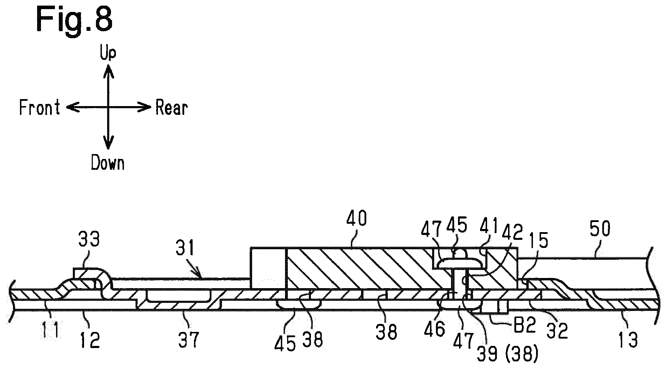

A plate-shaped locking section 33 extends from the front edge of the plate section 32. The locking section 33 extends along the front edge of the plate section 32 and the two edge sections extending from opposite ends of the front edge. As shown in Fig. 8, the locking section 33 is bent so as to be positioned above the plate section 32, and the boundary section between the locking section 33 and the plate section 32 includes a step. As shown in Fig. 6, attachment sections 34 extend from the rear edge of the plate section 32. One attachment section 34 is formed on each of the opposite sides in the vehicle width direction of the plate section 32. Each attachment section 34 includes one through hole 35 extending through the attachment section 34 in the thickness direction. The positions of the two attachment sections 34 (the through holes 35) corresponds to the positions of the two first attachment holes 16 in the under cover body 11.

The plate section 32 includes two slits 36 at the opposite ends of the locking section 33. Each slit 36 extends toward the center from the edge. The slits 36 are formed adjacent to the opposite ends in the extending direction of the locking section 33.

The plate section 32 includes a protrusion 37 extending downward between the two slits 36 in the vehicle width direction. The protrusion 37 is trapezoidal as viewed from above. Of the short side and the long side parallel to each other in the trapezoid, the long side is located rearward of the short side. As shown in Fig. 8, the protrusion 37 is formed by deforming a part of the plate section 32 to bulge.

As shown in Fig. 6, the plate section 32 includes a plurality of vent holes 38 located rearward of the protrusion 37. The vent holes 38 extend through the plate section 32 in the thickness direction. This embodiment has forty-one vent holes 38, which are arranged at substantially equal intervals in the front-rear direction and the vehicle width direction. Each vent hole 38 is circular as viewed from above. The inner diameter of each vent hole 38 may be between 5 mm and 15 mm inclusive. In this embodiment, it is 8 mm. All vent holes 38 of this embodiment are identical in shape and size (inner diameter). In Fig. 6, the reference numeral is indicated for only some of the forty-one vent holes 38.

As shown in Fig. 8, the locking section 33 of the center covering member 31 is engaged with the front edge of the center service hole 15 and placed over the upper surface of the under cover body 11. As shown in Figs. 3 and 6, bolts B2 (see Fig. 8) are inserted in the through holes 35 in the center covering member 31 and the first attachment holes 16 in the under cover body 11. The bolts B2 fasten the center covering member 31 to the under cover body 11 with the center service hole 15 in the under cover body 11 closed by the plate section 32 of the center covering member 31. In this embodiment, the under cover 10 includes the under cover body 11, the two side covering members 21, and the center covering member 31. Figs. 2 and 3 do not show the bolts B2.

As shown in Figs. 2 and 3, a plate-shaped center sound-absorbing member 40 is attached to the upper surface of the plate section 32 of the center covering member 31. The center sound-absorbing member 40 has a laminated structure including a cotton felt material and polyester nonwoven fabric laminated on the opposite sides in the thickness direction of the cotton felt material. There are gaps between the cotton fibers in the cotton felt material and between the polyester fibers in the nonwoven fabric, and adjacent gaps connect to each other. The center sound-absorbing member 40 thus has air permeability. The figures do not show the laminated structure of the center sound-absorbing member 40.

As shown in Figs. 3 and 7, the center sound-absorbing member 40 has, as viewed from above, the shape that corresponds to the region of the center covering member 31 that has the vent holes 38. In other words, the center sound-absorbing member 40 is shaped so as to cover all vent holes 38 in the center covering member 31. The dimensions in the front-rear direction and the vehicle width direction of the center sound-absorbing member 40 are less than those of the center service hole 15 in the under cover body 11. As such, the center sound-absorbing member 40 attached to the upper surface of the center covering member 31 does not extend over the region where the under cover body 11 is present.

As shown in Fig. 7, the upper surface of the center sound-absorbing member 40 includes recesses 41, which are circular as viewed from above. The center sound-absorbing member 40 has three recesses 41 in total, two in the front section and one in the rear section. The bottom surface of each recess 41 includes a hole 42 extending through the center sound-absorbing member 40 in the thickness direction. The hole 42 has a smaller inner diameter than the recess 41. The positions of the three recesses 41 (the holes 42) in the center sound-absorbing member 40 correspond to the positions of three of the forty-one vent holes 38 in the center covering member 31. These three vent holes 38 function as clip holes 39 used to attach the center sound-absorbing member 40.

As shown in Fig. 8, the center sound-absorbing member 40 is fixed to the plate section 32 of the center covering member 31 with clips 45, which serve as fixing members. Each clip 45 includes a rod-shaped shaft 46. The shaft 46 has an outer diameter that is smaller than the inner diameter of the holes 42 in the center sound-absorbing member 40 and the inner diameter of the clip holes 39 (the vent holes 38) in the center covering member 31. Two flanges 47 extend radially outward from the outer circumferential surface of the shaft 46. Each flange 47 is annular as viewed from above and has an outer diameter that is larger than the inner diameter of the holes 42 in the center sound-absorbing member 40 and the inner diameter of the clip holes 39 (the vent holes 38) in the center covering member 31. The two flanges 47 are spaced apart from each other in the axial direction of the shaft 46. The clip 45 is made of plastic and is thus elastically deformable to some extent.

To fix the center sound-absorbing member 40 to the plate section 32 of the center covering member 31, one of the two flanges 47 of each clip 45 is elastically deformed so that the shaft 46 is inserted into a clip hole 39 (a vent hole 38) in the center covering member 31 and a hole 42 in the center sound-absorbing member 40. This places one of the two flanges 47 within a recess 41 of the center sound-absorbing member 40 and places the other below the center covering member 31. Accordingly, the center sound-absorbing member 40 and the plate section 32 of the center covering member 31 are sandwiched between the two flanges 47 of the clip 45 and thus fixed.

As shown in Fig. 2, plate-shaped side sound-absorbing members 50 are attached to the sections of the upper surface of the under cover body 11 rearward of the two side service holes 17. In the same manner as the center sound-absorbing member 40, each side sound-absorbing member 50 has a laminated structure including a cotton felt material and polyester nonwoven fabric laminated on the opposite sides of the cotton felt material. As shown in Fig. 3, the side sound-absorbing members 50 are rectangular as viewed from above. Each of the two side sound-absorbing members 50 is arranged such that its longitudinal axis extends along the corresponding one of the two side edges 11a of the under cover body 11.

The upper surface of each side sound-absorbing member 50 includes three recesses 51, which are circular as viewed from above. The bottom surface of each recess 51 includes a hole 52 extending through the side sound-absorbing member 50 in the thickness direction. The hole 52 has a smaller inner diameter than the recess 51. The positions of the three recesses 51 (the holes 52) correspond to the positions of the three third attachment holes 19 on the corresponding side in the vehicle width direction of the under cover body 11. Although not shown, the side sound-absorbing members 50 are fixed to the under cover body 11 with clips, which have a similar structure as the clips 45 that fix the center sound-absorbing member 40 to the center covering member 31.

An operation and advantages of the present embodiment will now be described.

In the lower section of the vehicle C, the presence of the under cover 10 forms a space below the internal combustion engine E and the transmission TM of the vehicle and above the under cover 10. If the acoustic waves caused by vibration of the internal combustion engine E or the transmission TM and vibration from the road surface are transmitted to the components defining this space, the acoustic waves may resonate in the space and create noise. In particular, when the vibration of the internal combustion engine E and the transmission TM and the vibration from the road surface are close to the natural frequency of the space or its multiples, the resonance in the space increases.

In this embodiment, the side sound-absorbing members 50 are attached to the upper surface of the under cover body 11, and the center sound-absorbing member 40 is attached to the upper surface of the center covering member 31. Inside the center and side sound-absorbing members 40 and 50, minute gaps are formed between fibers. This allows the center and side sound-absorbing members 40 and 50 to reduce the noise of a relatively high frequency range.

In the present embodiment, the plate section 32 of the center covering member 31 includes a plurality of vent holes 38, which provides communication between the space above the under cover body 11 and the outside space under the vehicle C. This helps to guide the acoustic waves of relatively low frequencies, which are not effectively absorbed by the side sound-absorbing members 50 or the center sound-absorbing member 40, to the outside. This limits resonance in the space above the under cover body 11, thereby reducing low-frequency noise occurring in the space above the under cover body 11.

In this embodiment, the position of the center service hole 15 in the under cover body 11, that is, the position of the vent holes 38 in the center covering member 31, is directly below the internal combustion engine E. Among the noises occurring in the space above the under cover body 11, a noise of a relatively low frequency range is likely to result from the vibration of the internal combustion engine E. The present embodiment helps to guide the low-frequency noise, which is caused by the vibration of the internal combustion engine E, to the outside through the vent holes 38 in the center covering member 31, which are positioned directly below the internal combustion engine E. This maximizes the noise reduction effect of the vent holes 38.

In the present embodiment, the center sound-absorbing member 40 closes all the vent holes 38 in the center covering member 31. The center sound-absorbing member 40 blocks entry of foreign matter, which may be sand or stones thrown from the road surface while the vehicle C travels, into the space above the under cover body 11 through the vent holes 38. In the present embodiment, the inner diameter of the vent holes 38 is 8 mm, so that foreign matter larger than this diameter cannot pass through the vent holes 38. This reduces the possibility that excessively large foreign matter hits and breaks the center sound-absorbing member 40. The center sound-absorbing member 40 has air permeability. As such, even though the center sound-absorbing member 40 closes the vent holes 38, this does not unduly hinder the transmission of acoustic waves through the vent holes 38.

If the center covering member 31 does not have the center sound-absorbing member 40, the air flowing above the under cover 10 would move to the space below the under cover 10 through the vent holes 38 in the center covering member 31. Such a flow of air would disturb the flow of air in the space below the under cover 10. This may prevent the under cover 10 from improving the aerodynamic characteristics as expected. Although the center sound-absorbing member 40 has air permeability, the center sound-absorbing member 40 still reasonably limits the flow of air through it. As such, the air flowing above the under cover 10 does not easily flow to the space below the under cover 10 through the vent holes 38 and the center sound-absorbing member 40. The under cover 10 thus maintains the effect of improving the aerodynamic characteristics.

As for the under cover 10 described above, the same under cover bodies 11 may be used for various types of vehicles. However, different vehicle types may require different noise frequencies to be reduced because of the variations in type of the internal combustion engine E used and the variations in volume or shape of the space above the under cover 10, for example. Thus, to effectively reduce noise in various types of vehicles, it is preferable that the shape, number, and layout of the vent holes 38 in the center covering member 31 be appropriately designed for each vehicle type.

In the present embodiment, the vent holes 38 are provided in the center covering member 31. As such, preparing various center covering members that differ in shape, number, and layout of vent holes accommodates the need for different vehicle types, without changing the design of the under cover body 11. That is, the vehicle lower structure of the present embodiment can be used for various vehicle types with minimum specification changes and is therefore highly versatile.

The present embodiment uses some of the vent holes 38 in the center covering member 31 as the clip holes 39, which receive clips 45. This eliminates the need for separately forming, in the center covering member 31, holes for clips 45 that differ from the vent holes 38 in structure. This simplifies the process of manufacturing the center covering member 31.

In this embodiment, the center sound-absorbing member 40 is attached to the upper surface of the center covering member 31 and does not extend over the under cover body 11. Removing the center covering member 31 from the under cover body 11 also removes the center sound-absorbing member 40 from the under cover body 11. Thus, the center sound-absorbing member 40 may be replaced without removing the under cover body 11 from the frame of the vehicle C, for example, and is thus easy to replace when deteriorated or damaged.

The present embodiment may be modified as follows. The present embodiment and the following modifications can be combined as long as the combined modifications remain technically consistent with each other.

The under cover 10 does not have to be positioned below the internal combustion engine E and the transmission TM. For example, the under cover 10 may be positioned under the passenger compartment (the driver's seat, the front passenger seat, and the rear seat) or under the trunk compartment (luggage space). Even when the position of the under cover 10 is changed such that the vent holes 38 in the center covering member 31 are no longer positioned directly below the internal combustion engine E and the transmission TM, the vent holes 38 still reduce noise.

The overall shape of the under cover body 11 as viewed from above does not have to be trapezoidal and may be modified. The shape of the under cover body 11 may be designed according to the attachment position of the under cover 10 and the shapes of other structures (other under covers), for example.

The positions and shapes of the center service hole 15 and the side service holes 17 are not limited to those of the present embodiment. As long as the services holes 15 and 17 are sized and shaped so as to allow insertion of fingers or tools, their shapes and positions may be modified according to the position and the shape of the target to be accessed (the internal combustion engine E and the transmission TM) through the service holes.

The shape of the two side service holes 17 does not have to be symmetrical. For example, the suitable position and shape of the side service holes 17 may vary among different vehicle types. Thus, one of the side service holes 17 may have a shape that is suitable for a certain vehicle type, and the other side service hole 17 may have a shape that is suitable for another vehicle type. This configuration allows the under cover body 11 of the common specification to be used for various vehicle types.

The center service hole 15, the side service holes 17, the center covering member 31, and the side covering member 21 may be omitted. In this case, vent holes may be formed in the under cover body 11, and a sound-absorbing member may be attached to the under cover body 11 so as to close the vent holes.

The manner in which the center covering member 31 is attached to the under cover body 11 may be modified. For example, the locking section 33 of the center covering member 31 may be omitted, and the center covering member 31 may be attached to the under cover body 11 only with bolts. Nevertheless, since the center service hole 15 may be used for maintenance of the vehicle C, the center service hole 15 is preferably attached in a manner that enables easy removal of the center service hole 15. The same applies to the side service holes 17.

Instead of or in place of the vent holes 38 in the center covering member 31, the side covering members 21 may include vent holes. For example, when the characteristics of the noise occurring in the space above the under cover 10 are such that the noise is effectively reduced by vent holes that coincide with the side service holes 17, the structure of the vent holes 38 in the center covering member 31 may be used for the side covering members 21. Tests or simulations may be performed to determine which covering member should include vent holes. When a side covering member 21 includes vent holes, a sound-absorbing member is preferably attached to the upper surface of this side covering member 21 to close the vent holes.

The shape and size of the vent holes 38 in the center covering member 31 may be modified. For example, as viewed from above, each vent hole 38 may be non-circular, that is, it may be polygonal or has the shape of an elongated ellipse (a groove). However, to reduce the noise of a relatively low frequency range, the dimension of the smallest dimension section of the vent holes 38 is preferably greater than or equal to 5 mm. The dimension of the smallest dimension section may be the dimension of the shorter sides when the vent hole 38 is rectangular (has the shape of a groove), or the dimension of the minor axis when the vent hole 38 is elliptical. Further, to reduce damage of the center sound-absorbing member 40, the dimension of the largest dimension section of the vent hole 38 is preferably less than or equal to 15 mm. Consequently, the size of any foreign matter entering through such vent holes 38 will be less than 15 mm. This reduces the possibility that the sound-absorbing member 40 is damaged when hit by any foreign matter. The dimension of the largest dimension section may be the dimension of a diagonal line when the vent hole 38 is rectangular, or the dimension of the major axis when the vent hole 38 is elliptical. The number of the vent holes 38 may be modified according to the shape and size of the vent holes 38.

Depending on the frequency range of the noise to be reduced, the dimension of the smallest dimension section of the vent hole 38 may be less than 5 mm.

Depending on the structure of the sound-absorbing member, the dimension of the largest dimension section of the vent hole 38 may be greater than 15 mm. For example, the center covering member 31 may be omitted, and the center service hole 15 may be used as a vent hole. In this case, a sound-absorbing member may be attached so as to close the center service hole 15.

The center and side sound-absorbing members 40 and 50 may be made of any material with air permeability. For example, a foamed plastic having continuous pores may be used. When the center sound-absorbing member 40 is made of a relatively hard material that resists damage when hit by some foreign matter, the vent holes 38 may be enlarged without causing problems.

The center covering member 31 may have clip holes that are formed separately from the vent holes 38 to attach the center sound-absorbing member 40. Further, some of the clip holes for attachment of the center sound-absorbing member 40 may differ from the vent holes 38 in shape. Furthermore, the center sound-absorbing member 40 may be attached to the center covering member 31 with an adhesive and without using clip holes or clips 45.

Provided that the vent holes 38 in the center covering member 31 are closed, the center sound-absorbing member 40 may be attached to the under cover body 11 instead of the center covering member 31.

The center sound-absorbing member 40 does not necessarily have to close all the vent holes 38, and may close only some of the vent holes 38. In addition, the center sound-absorbing member 40 may be divided into a plurality of parts.

## Claims

1. A vehicle lower structure comprising:
a plate-shaped under cover (10) configured to be attached to a lower section of a vehicle (C) to form a part of an underside of the vehicle (C); and
an air-permeable sound-absorbing member (40), which is attached to an upper surface of the under cover (10), wherein
the under cover (10) includes one or more vent holes (38) extending through the under cover (10) in a thickness direction, and
the sound-absorbing member (40) is attached to the under cover (10) so as to close the one or more vent holes (38).

2. The vehicle lower structure according to claim 1, wherein
the under cover (10) includes an under cover body (11), which has a service hole (15) extending through the under cover body (11) in the thickness direction, and a covering member (31), which closes the service hole (15), and
the covering member (31) includes the one or more vent holes (38).

3. The vehicle lower structure according to claim 1 or 2, wherein
the one or more vent holes (38) include a plurality of vent holes (38), and
the sound-absorbing member (40) is attached to the under cover (10) with a fixing member (45) that is inserted in some of the vent holes (38).

4. The vehicle lower structure according to any one of claims 1 to 3, wherein when the under cover (10) is attached to the vehicle (C), the one or more vent holes (38) are positioned directly below an internal combustion engine (E) or a transmission (TM) of the vehicle (C).

5. The vehicle lower structure according to any one of claims 1 to 4, wherein
each of the one or more vent holes (38) is non-circular and includes a smallest dimension section and a largest dimension section,
the smallest dimension section has a dimension greater than or equal to 5 mm, and
the largest dimension section has a dimension less than or equal to 15 mm.

6. The vehicle lower structure according to any one of claims 1 to 4, wherein the one or more vent holes (38) each have an inner diameter between 5 mm and 15 mm inclusive.
